# FASCICULE DE BREVET EUROPEEN

(11) **EP 0 392 894 B1**
(45) Date de publication et mention de la délivrance du brevet: **19.05.1993**
(21) Numéro de dépôt: 90400862.0
(22) Date de dépôt: 29.03.1990
(51) Int. Cl.: E02D 29/10

(54) **Ouvrage tubulaire souterrain et son procédé de réalisation**
Unterirdisches rohrförmiges Gebilde und Verfahren zu seiner Herstellung
Underground tubular construction and method for its construction

(30) Priorité: 10.04.1989 FR 8904691
(43) Date de publication de la demande: 17.10.1990
(73) Titulaire: Matière, Marcel, F-15000 Aurillac (FR)
(72) Inventeur: Matière, Marcel, F-15000 Aurillac (FR)
(74) Mandataire: Phélip, Bruno

(56) Documents cités:
- WO-A-86/00683
- WO-A-86/02967
- DE-A- 2 326 456

## Description

L'invention a pour objet un ouvrage tubulaire souterrain constitué de plusieurs conduits associés et couvre également un procédé original permettant d'ajouter à un conduit existant un ou plusieurs conduits supplémentaires.

On sait que, pour réaliser des conduites souterraines ou des tunnels, même de grandes dimensions, lorsque la hauteur de terre supportant le tunnel n'est pas trop importante, il est préférable de réaliser une tranchée, de construire le tunnel à ciel ouvert, puis de remblayer la tranchée.

Selon la section de la conduite, celle-ci peut être construite de différentes façons, par exemple en maçonnerie ou bien en éléments préfabriqués associés. Dans sa demande de brevet européen EP-A-0 081402, l'inventeur a déjà décrit un procédé original de construction de structures creuses tubulaires pouvant avoir une très grande section, correspondant éventuellement au gabarit routier et destinées à être posées sur le fond d'une tranchée remblayée après la pose. Dans ce procédé, le conduit est constitué d'une pluralité d'éléments longitudinaux associés formant en ensemble de tronçons adjacents mis bout-à-bout le long d'une direction longitudinale, chaque élément couvrant, dans le sens transversal, une partie de la section droite et dans le sens longitudinal, la longueur du tronçon correspondant.

Pour construire le conduit, jusqu'au niveau de base voulu, on ouvre donc une tranchée dont le fond forme une surface de pose aplanie, sur laquelle on place un certain nombre de tronçons mis bout-à-bout que l'on relie entre eux, par exemple, par deux poutres longitudinales noyées dans le radier et l'on referme ensuite la tranchée.

Dans le mode de réalisation décrit dans EP-A-0 081402, chaque tronçon comprend un élément inférieur formant un radier qui repose sur le fond de la tranchée, deux éléments de côtés placés de part et d'autre du radier et muni chacun à sa base d'une partie de stabilisation leur permettant de se tenir droit sur le sol sans échafaudage, et un élément de voûte qui repose sur les extrémités supérieures des éléments de côté.

Dans un autre mode de réalisation, qui fait l'objet de la demande de brevet européen EP-A-0 081402, le même inventeur a décrit un autre type de structure pouvant également avoir une grande section et dans lequel chaque tronçon est constitué de deux éléments, respectivement un élément inférieur formant un radier plan et un élément supérieur en forme de voûte incurvée reposant, par ses extrémités inférieures, sur des organes d'appui ménagés le long des côtés latéraux du radier.

On peut réaliser, de cette façon, des conduites pour les applications, les plus diverses, par exemple égouts, adductions d'eau, passages souterrains, par exemple sous une voie ferrée ou une autoroute, pour des piétons, du bétail, une rivière, etc... .

On connaît également (DE-A-2 326456) un procédé de construction de garages souterrains constitués d'un ensemble de nefs accolées limitées chacune par un plancher et par une voûte réalisée en éléments cintrés préfabriqués reposant par leurs bords latéraux sur des appuis ménagés au niveau du plancher.

Dans le cas d'un garage à plusieurs étages, chaque voûte d'un étage supérieur prend appui, par ses bords latéraux, sur des murs verticaux s'élevant de part et d'autre de la voûte correspondante de l'étage inférieur.

Les espaces compris entre lesdits murs et les voûtes sont remplis d'un remblai sur lequel repose le plancher supérieur. Ce dernier n'est donc pas soumis à des efforts de flexion et peut être allégé, les charges étant transmises par les voûtes sur les murs verticaux.

Cependant, il est parfois nécessaire de construire des ouvrages constitués de plusieurs conduits associés, permettant des utilisations différentes. Par exemple, une conduite de chauffage urbain peut être associée à des galeries pour le passage de câbles électriques ou de canalisations diverses, eau, gaz, etc... .

En site rural, il peut également être intéressant d'associer à une conduite souterraine de passage d'une rivière, un autre passage, par exemple pour des piétons ou du bétail.

Lorsqu'un tel besoin se manifeste au moment de la construction, il est simple de réaliser dans la même tranchée plusieurs conduits placés l'un à côté de l'autre, mais il faut alors augmenter la largeur de la tranchée et par conséquent le volume de terre déplacé et les surfaces expropriées.

Par ailleurs, la nécessité de disposer d'un conduit supplémentaire ou d'une section de passage plus grande peut se révéler bien après la construction de l'ouvrage.

L'invention apporte une solution à ce genre de problèmes et a donc pour objet un nouveau type d'ouvrage tubulaire constitué de plusieurs sections associées, ainsi que des procédés particuliers permettant de construire plusieurs conduits associés ou d'adjoindre un nouveau conduit à un conduit existant.

Conformément à l'invention, un tel ouvrage tubulaire est constitué d'au moins deux conduits superposés, respectivement un conduit bas reposant sur le sol et un conduit haut placé au-dessus du conduit bas et constitué, en section droite, d'au moins deux éléments préfabriqués, respectivement un élément inférieur en forme de U inversé enjambant le conduit bas et comprenant un plancher s'étendant horizontalement au-dessus du conduit bas et reposant sur deux parties latérales sensiblement verticales, prenant appui sur le conduit bas, respectivement le long des deux côtés latéraux de ce dernier, et un élément supérieur de recouvrement enjambant l'élément inférieur en fermant la section vers le haut et reposant sur deux organes d'appui longitudinaux ménagés sur la face supérieure de chaque partie latérale de l'élément inférieur, l'ouvrage étant défini avec plus de détail dans la revendication 1.

Le conduit bas peut être en ouvrage déjà existant réalisé, par exemple, en maçonnerie et qui est alors simplement découvert pour réaliser le conduit haut.

Mais le conduit bas peut aussi être réalisé, comme le conduit haut, à partir d'éléments préfabriqués, par exemple de la façon décrite dans la demande du même inventeur citées plus haut.

Dans un mode de réalisation particulièrement avantageux, l'ouvrage selon l'invention comprend, en section droite, un premier élément formant un radier reposant sur le sol et constituant l'élément inférieur du conduit bas, en élément intermédiaire reposant sur ledit élément inférieur et constituant, d'un côté l'élément supérieur de recouvrement du conduit bas et de l'autre l'élément inférieur du conduit haut, et au moins un élément supérieur de recouvrement du conduit haut, reposant sur ledit élément intermédiaire, ce dernier étant muni, le long de ses côtés latéraux et sur ses deux faces opposées, respectivement inférieure et supérieure, d'organes longitudinaux, respectivement d'appui sur l'élément inférieur du conduit bas et d'appui de l'élément supérieur du conduit haut.

L'élément intermédiaire peut en particulier être muni d'une face inférieure incurvée en forme de voûte formant le plafond du conduit bas et d'une face supérieure sensiblement plane formant le fond du conduit haut.

Dans un autre mode de réalisation avantageux, l'ouvrage tubulaire selon l'invention comprend, en section droite, un premier élément inférieur reposant sur le sol et formant un radier pour le conduit bas, un premier élément supérieur de recouvrement du conduit bas, reposant sur ledit premier élément inférieur, le long de deux organes d'appui longitudinaux, un second élément inférieur formant le fond du conduit haut et ayant une face inférieure en forme de U inversé coiffant le premier élément supérieur et comprenant deux flancs latéraux s'étendant un équerre vers le bas et dont les extrémités inférieures prennent appui sur l'un des éléments du conduit bas et un second élément supérieur de recouvrement du conduit haut reposant sur ledit second élément inférieur.

Les parties d'appui longitudinales sur lesquelles reposent les deux flancs latéraux du second élément inférieur peuvent être ménagées sur le premier élément supérieur, le long des côtés latéraux de ce dernier, ou bien de part et d'autre des organes d'appui du premier élément supérieur, le long des côtés latéraux du premier élément inférieur.

De préférence, les organes d'appui longitudinaux interposés entre deux éléments, respectivement supérieur et inférieur, comprennent un rebord de centrage allongé ménagé en saillie le long du côté latéral de l'un des éléments et s'engageant, à la pose des éléments l'un sur l'autre, dans une rainure correspondante ménagée en creux le long du côté latéral correspondant de l'autre élément. Le rebord de centrage et la rainure ont, avantageusement, des profils arrondis, respectivement convexe et concave, avec une différence de courbure ménageant un léger jeu transversal de façon à donner à l'organe d'appui ainsi constitué, une certaine possibilité d'articulation autour d'un axe longitudinal.

Mais l'invention ne se limite pas seulement à la réalisation de deux conduits superposés car il est possible, en appliquant les mêmes méthodes, de superposer trois conduits ou même plus, chaque conduit haut reposant sur le conduit placé au-dessous de lui et le conduit bas sur le sol.

L'invention permet donc de réaliser rapidement et avec peu de personnel et de matériel, des ouvrages tubulaires constitués de plusieurs conduits superposés. En outre, la structure particulière d'un tel ouvrage permet, après la pose d'un conduit, de lui adjoindre assez facilement un ou même plusieurs conduits supplémentaires.

Pour cela, il est possible de laisser en place le conduit existant. Dans ce cas, ayant ouvert la tranchée jusqu'à découvrir entièrement le conduit déjà réalisé, on recouvre ce dernier par un conduit supplémentaire comprenant, en section droite, un élément inférieur en forme de U renversé comprenant une partie centrale passant au-dessus de l'élément supérieur du conduit existant et deux flancs latéraux prenant appui sur l'un des éléments du conduit existant, le long de ses côtés latéraux, puis l'on pose sur ledit élément en forme de U un élément supérieur de recouvrement fermant vers le haut, en section droite, le conduit supplémentaire ainsi formé, et l'on referme ensuite la tranchée.

Mais si le conduit existant est du type comprenant un élément de radier recouvert par un élément supérieur formant voûte, il peut être intéressant de mettre à profit cette particularité.

En effet, ayant ouvert la tranchée jusqu'à découvrir entièrement le conduit, on peut enlever l'élément supérieur pour le remplacer par un élément intermédiaire comprenant une partie centrale formant un plancher et deux parties latérales munies à leurs extrémités inférieures d'organes d'appui longitudinaux reposant sur des organes correspondants de l'élément inférieur et présentant, sur leur face supérieure, des organes d'appui longitudinaux analogues à ceux de l'élément inférieur. On referme alors le conduit haut en replaçant sur l'élément intermédiaire l'élément supérieur préalablement enlevé ou bien un autre élément supérieur, ce dernier venant reposer sur lesdits organes d'appui de la face supérieure de l'élément intermédiaire.

On voit que, d'une façon générale, l'invention permet, soit d'ajouter à un conduit existant un ou plusieurs conduits supplémentaires sans difficulté particulière autre que la nécessité de réouvrir la tranchée, soit de construire dès l'origine plusieurs conduits superposés. Cette possibilité sera parfois très intéressante, par exemple pour passer dans un site resserré ou bien pour faire bénéficier plusieurs concessionnaires de la même largeur d'emprise.

D'autres caractéristiques et avantages de l'invention ressortiront de la description qui va suivre.

Aux dessins annexés donnés à titre d'exemples non limitatifs:

Les Figures 1 et 2 représentent en coupe transversale deux variantes d'un ouvrage à sections superposées selon un premier mode de réalisation de l'invention.

La Figure 3 est une vue de détail représentant une variante d'un organe d'appui inférieur.

La Figure 4 est une vue en coupe transversale d'un ouvrage à sections superposées selon un second mode de réalisation de l'invention.

La Figure 5 représente schématiquement une extension à un conduit à trois sections superposées.

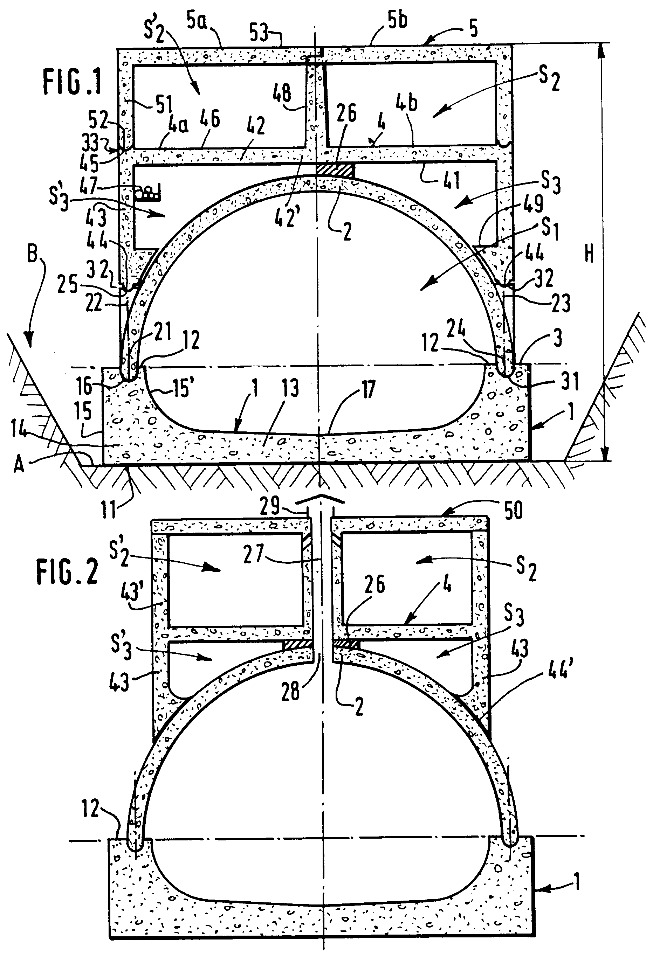

Sur la Figure 1, on a représenté schématiquement, en coupe transversale, un ouvrage tubulaire constitué de deux conduits superposés, respectivement un conduit bas S1 et un conduit haut S2.

Dans le mode de réalisation représenté, le conduit S1 est constitué, de façon connue en soi, de deux éléments, respectivement un élément inférieur 1 et un élément supérieur 2 posé sur l'élément inférieur 1.

Ce dernier forme un radier plan 13, relevé sur chacun de ses côtés latéraux 14 par une paroi comprenant par exemple, une face externe 15 verticale et une face interne 15' incurvée et se raccordant à la face supérieure 17 du radier 1 qui forme ainsi le fond du conduit S1.

De préférence, le radier 1 est muni d'une face inférieure plane 11 qui repose sur le fond aplani et tassé A d'une tranchée B.

L'élément supérieur 2 de recouvrement du conduit inférieur S1 est constitué par une paroi incurvée en forme de voûte demi-circulaire reposant, par ses extrémités inférieures 21, sur les extrémités supérieures 12 des parois latérales 14, par l'intermédiaire d'organes d'appui longitudinaux 3. De préférence, chaque organe d'appui longitudinal 3 est constitué par des parties conjuguées ménagées respectivement en creux et en saillie sur les deux éléments 1 et 2 et s'engageant l'une dans l'autre. Par exemple, dans le mode de réalisation représenté, l'organe d'appui 3 comprend une rainure concave 16 ménagée sur l'extrémité supérieure 12 de la paroi latérale 14 de l'élément inférieur 1 et sur le fond de laquelle repose une face arrondie convexe 24 ménagée sur le bord de l'extrémité inférieure 21 de l'élément supérieur 2.

Ainsi, chaque appui latéral de la voûte 2 sur le radier 1 est articulé autour d'un axe parallèle à la direction longitudinale du conduit S1, les faces convexes 24 ayant une courbure un peu plus accentuée que les rainures concaves 16 de façon à ménager un léger jeu transversal.

Par ailleurs, il est avantageux de fixer l'élément supérieur 2 sur l'élément inférieur 1 au moyen de tirants 23 orientés sensiblement suivant des plans verticaux passant par le fond des rainures 16 et dont une extrémité se visse ou est ancrée dans la paroi latérale 14 de l'élément inférieur 1, l'autre extrémité formant une tête d'appui sur un bossage 22 ménagé sur le côté latéral de l'élément supérieur 2. Cette disposition permet d'une part d'éviter les risques de glissement des appuis articulés et, d'autre part, de résister à des pressions internes, par exemple, si le conduit S1 est utilisé pour la circulation de liquides ou de fluides sous pression, notamment en chauffage urbain.

Dans le mode de réalisation de la Figure 1, le conduit haut S2 comprend un élément inférieur 4 dont la face 41 tournée vers le bas a une forme en U inversé qui lui permet de coiffer l'élément supérieur 2 du conduit bas S1. A cet effet, l'élément inférieur 4 du conduit haut S2 peut comprendre avantageusement une partie centrale en forme de dalle horizontale 42 et deux flancs latéraux 43 s'étendant en équerre vers le bas et reposant sur le conduit bas S1 par des organes d'appui longitudinaux 32.

Sur la Figure 1, par exemple, chaque organe d'appui 32 comprend une rainure concave 25 ménagée sur la partie supérieure du bossage 22 et dans laquelle vient s'appuyer un rebord rectiligne à face arrondie 44 ménagé le long de l'extrémité inférieure du flanc latéral 43. Bien entendu, si le conduit S1 est muni de tirants de maintien 23, les têtes supérieures de ces derniers peuvent être placées dans des évidements ménagés dans le fond des rainures 25 de façon à ne pas gèner la pose de l'élément 4.

En cas de besoin, la dalle horizontale 42 peut aussi prendre appui sur la voûte 2, par exemple sur le sommet de celle-ci, ce qui permet d'alléger la dalle 42, la voûte 2 résistant mieux aux charges verticales.

Un tel appui central 26, qui a été représenté sur un seul côté de la Figure 1, pour montrer qu'il est facultatif, permettrait aussi de réaliser l'élément de construction 4 en deux parties, respectivement 4a et 4b, s'appuyant chacune vers l'extérieur, par le côté 43, sur un appui latéral externe 32 et vers l'intérieur, par un côté interne 42', sur le sommet de la voûte 2, par l'intermédiaire de l'appui central 26. Une telle disposition permettrait, pour les grandes sections, d'alléger le poids de l'élément 4 et d'en faciliter le transport et la pose mais suppose évidemment que la voûte du conduit bas S1 soit réalisée de façon à résister aux efforts transmis par l'appui central (26).

Le conduit haut S2 est fermé par un élément supérieur de recouvrement 5 qui repose sur l'élément inférieur 4 par des organes d'appui longitudinaux 33 qui peuvent aussi être avantageusement constitués par des rebords rectilignes 52, à face arrondie convexe, ménagés le long des extrémités latérales inférieures 51 de l'élément de recouvrement 5 et s'engageant chacun dans une rainure concave 45 ménagée le long de chaque côté latéral de la face supérieure 46 de l'élément inférieur 4. L'élément supérieur 5 peut être réalisé en forme de voûte incurvée comme le premier élément supérieur 2 ou bien, comme on l'a représenté sur la Figure, comporter une partie centrale 53 en forme de dalle, prolongée sur ses côtés latéraux par des flancs verticaux 51 s'étendant vers le bas. Une telle disposition permet en effet de réduire la hauteur totale H de l'ouvrage, ce qui peut être important lorsque le remblai a une hauteur limitée et, par exemple, d'utiliser la dalle horizontale 53 pour former un passage supérieur.

Comme on l'a représenté sur la Figure 1, si la portée de la dalle supérieure 53 est trop importante, celle-ci peut s'appuyer sur une cloison verticale 48 ou une rangée de piliers placés sur la dalle inférieure 4, dans le plan médian du conduit. L'élément supérieur 5 peut alors être constitué de plusieurs parties accolées. Le conduit haut est ainsi partagé en deux sections parallèles S2, S'2 ce qui peut être utile, par exemple pour attribuer des fonctions différentes aux deux sections S2, S'2.

A l'inverse, si la hauteur de l'ensemble n'a pas besoin d'être limitée, il peut être intéressant de donner à l'élément supérieur 5 la forme d'une voûte analogue à la voûte 2 qui résistera mieux aux charges appliquées et permettra d'augmenter la section de passage du conduit haut S2.

La présence d'un cloison intermédiaire 48 permettrait comme on l'a indiqué pour l'élément inférieur 4, de réaliser, en cas de besoin, l'élément supérieur 5 en deux parties respectivement gauche 5a et droite 5b accolées le long de deux côtés latéraux en vis-à-vis s'appuyant sur la cloison centrale 48 et prenant appui chacune vers l'extérieur, par un côté 51, sur un appui longitudinal 33.

On a ainsi réalisé un ouvrage comprenant deux conduits tubulaires S1, S2 superposés auxquels, on peut adjoindre, d'ailleurs, l'espace intermédiaire constitué de deux parties S3, S'3 ayant une section droite en forme de triangle curviligne et qui pourraient être avantageusement utilisées, par exemple pour le passage de canalisations ou de câbles électriques portés par des supports 47 fixés sur les flancs latéraux 43 ou bien sur la face supérieure de la voûte 2.

Pour mieux utiliser ces parties triangulaires S3, S'3, on peut adjoindre à la base des côtés latéraux 43 de l'élément inférieur 4, des élargissements 49 s'étendant en console vers l'intérieur et ménageant une face supérieure sensiblement plane facilitant la circulation et/ou la pose de canalisation et une face latérale épousant sensiblement la forme de la voûte 2.

La Figure 2 représente une variante de ce mode de réalisation de l'invention utilisable, notamment, lorsque le conduit supérieur S2 doit avoir une plus faible section.

Dans ce cas, en effet, l'élément inférieur 4 du conduit haut repose directement, par sa partie centrale, sur le sommet du premier élément supérieur 2, par exemple par l'intermédiaire d'un coussin amortisseur 26 de nature appropriée.

Les extrémités inférieures 44' des flancs latéraux 43 du second élément inférieur 4 peuvent être constituées par de simples faces de centrage inclinées selon le profil de la face supérieure de l'élément de voûte 2 de façon à prendre un simple appui latéral sur celle-ci pour le centrage de l'élément supérieur 4.

Un tel mode de réalisation pourra être utilisé lorsque le conduit supérieur S2 est de faible dimension et que aucun organe d'appui n'a été prévu à l'avance sur l'élément supérieur 2.

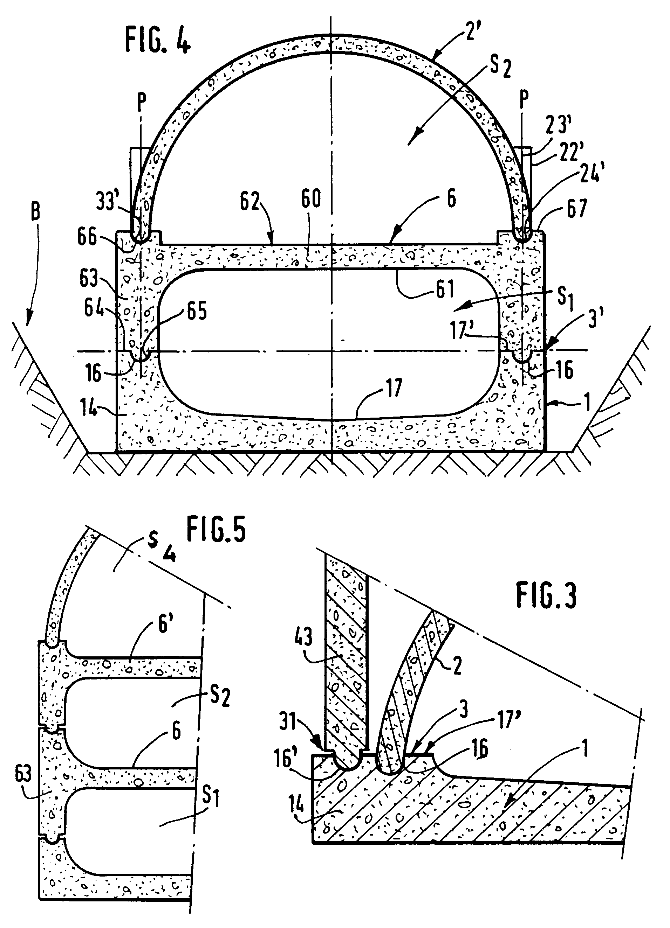

Dans d'autres cas, il pourra, au contraire, être avantageux d'utiliser le mode de réalisation représenté sur la Figure 3 dans lequel les flancs latéraux 43 de l'élément inférieur 4 du conduit haut S2 prennent appui directement sur les côtés latéraux 14 de l'élément de radier 1.

A cet effet, les organes d'appui longitudinaux 31 peuvent être ménagés à côté des organes d'appui 3 de l'élément de voûte 2 sur l'élément 1. Chaque organe d'appui supplémentaire 31 peut alors être constitué d'une rainure concave 16' ménagée sur la face supérieure du côté latéral 14 du radier 1, éventuellement élargie à cet effet.

Une telle disposition permet d'appliquer directement tous les efforts d'appui à l'élément de radier 1 qui les transmet au sol et peut être prévu en conséquence.

Bien entendu, des formes variées peuvent être données aux différents éléments longitudinaux de construction de conduits en tenant compte, notamment, des sections de passage à réaliser, de la forme des éléments du conduit bas si l'on intervient sur un conduit existant et des règles à suivre pour la construction.

A titre d'exemple, sur la Figure 2, le second élément supérieur 4 est muni, le long de ses côtés latéraux, de flancs verticaux 43' qui s'étendent vers le haut dans le prolongement des flancs 43 d'appui sur le conduit bas, et sur lesquels repose l'élément supérieur 5, ce dernier pouvant être constitué d'une simple dalle 50.

Par ailleurs, il est possible, dans tous les cas, de prévoir une ou plusieurs cloisons verticales 48 qui permettent de diviser le conduit haut en deux ou plusieurs sections S2, S'2 pouvant être affectées à des utilisations différentes.

Il peut également être utile de ménager dans l'élément supérieur de l'un ou l'autre des conduits S1, S2, un orifice d'évent au cas, par exemple, où les produits présents dans le conduit peuvent dégager des gaz dangereux qu'il ne faut pas laisser s'accumuler.

A titre d'exemple, sur la Figure 2, on a prévu une cheminée d'aération 27 partant d'un orifice 28 ménagé dans la voûte 2 et traversant successivement le plancher 4 et la seconde dalle 50 dans laquelle est ménagé un orifice 29, débouchant à l'extérieur du conduit et par lequel les gaz se dégagent dans le talus. Bien entendu, la cheminée 27 pourraît aussi être prolongée sur toute la hauteur remplissant la tranchée B.

Les autres sections S2, S'2 ou S3, S'3 peuvent aussi, en cas de besoin, communiquer avec la cheminée 27 par des orifices adéquats.

La Figure 4 représente, en coupe tranversale, un autre mode de réalisation d'un tronçon d'ouvrage tubulaire comprenant encore deux sections superposés S1, S2.

Dans ce cas, cependant, l'élément supérieur de recouvrement du conduit bas S1 est constitué par un élément intermédiaire 6 dont la face inférieure 61 constitue la voûte de fermeture vers le haut du conduit bas S1 alors que sa face supérieure 62 constitue le fond du conduit haut S2, celui-ci étant à son tour refermé vers le haut par un élément supérieure 2' qui peut avoir une forme en voûte semi-circulaire identique à celle de l'élément supérieur 2 du conduit bas S1 dans le cas des Figures 1 et 2.

A cet effet, l'élément intermédiaire 6 comprend une partie centrale 60 en forme de dalle horizontale et munie sur ses côtés, de deux flancs latéraux 63 s'étendant en équerre vers le bas, de façon que leurs extrémités inférieures 64 reposent sur l'élément inférieur 1 par l'intermédiaire d'organes d'appui longitudinaux 3'.

Comme précédemment, chaque organe d'appui longitudinal 3' comprend une rainure concave 16 ménagée sur la face supérieure 17' du côté latéral 14 de l'élément de radier 1 et dans laquelle s'engage un rebord de centrage rectiligne 65 à face arrondie convexe, ménagée sur l'extrémité inférieure 64 du flanc latéral 63. De préférence, le rebord 65 a une courbure convexe un peu plus accentuée que la rainure concave 16 et les faces en regard 64 et 17' des côtés latéraux, respectivement, 63 de l'élément intermédiaire 6 et 14 de l'élément inférieur 1 sont séparés par un espace donnant à l'organe d'appui 3' une certaine possibilité d'articulation autour d'un axe parallèle à la direction longitudinale de l'ouvrage. La face inférieure 61 de l'élément intermédiaire 6 a une forme en U inversé dont le profil est déterminé en fonction de celui de la face supérieure 17 de l'élément de radier 1 pour donner au conduit bas S1 la section droite de passage voulu.

De la même façon, la face supérieure 62 de l'élément intermédiaire 6 peut constituer une simple dalle horizontale ou bien être relevée sur ses bords comme l'élément inférieur 1 pour agrandir la section de passage du conduit haut S2, en surélevant les organes d'appui 33' de l'élément supérieur 2' sur l'élément intermédiaire 6.

En effet, ce dernier est muni, sur sa face supérieure 62, de deux rainures latérales concaves 66 dans lesquelles viennent reposer les bords inférieurs convexes 24' de l'élément supérieur 2'. Ces derniers ont, là encore, une courbure convexe plus accentuée que les rainures concaves 66 de façon à ménager les jeux nécessaires pour que l'organe d'appui longitudinal 33' ait une possibilité d'articulation autour d'un axe longitudinal.

Le cas échéant, des organes de maintien 23' tels que des tirants, centrés dans le plan médian vertical P de chaque rainure concave 66, peuvent assurer l'application sous pression de l'élément supérieure 2' sur l'élément intermédiaire 6, chaque tirant 23' étant ancré ou vissé, par son extrémité inférieure, dans le côté latéral 63 de l'élément intermédiaire 6 et prenant appui par son extrémité supérieure sur un bossage 22' ménagé sur le côté de l'élément supérieur 2'.

Les tirants 23' peuvent d'ailleurs être constitués par des tiges de précontrainte passant des orifices verticaux alignés ménagés dans les bossages 22' et dans les côtés latéraux 63 de l'élément intermédiaire 6 pour venir s'ancrer dans les cotés latéraux 14 de l'élément inférieur 1 de façon à réaliser la solidarisation de tous les éléments. Bien entendu, d'autres moyens de fixation pourraient être imaginés, par exemple des câbles de précontrainte entourant la totalité de l'ouvrage par l'extérieur.

Une telle disposition ne se limite pas à la réalisation d'ouvrages comportant seulement deux sections superposées et, à titre d'exemple, sur la Figure 5, on a représenté un ouvrage comprenant deux éléments intermédiaires superposés 6, 6' et permettant de limiter trois conduits, un conduit bas S1 et deux conduits hauts S2 et S4.

Comme indiqué plus haut, les éléments intermédiaires 6, 6' sont munis de côtés latéraux 63 qui peuvent être prolongés vers le haut ou vers le bas de façon à réaliser les sections de passage désirées.

Les différents modes de réalisation qui viennent d'être décrits permettent en particulier d'intervenir de façon très avantageuse sur un ouvrage existant de façon à lui adjoindre un ou même plusieurs conduits supplémentaires.

Dans le cas, en effet, des Figures 1 et 2, le conduit haut S2 peut être posé sur un conduit S1 construit auparavant. S'il s'avère nécessaire de lui ajouter un conduit supplémentaire, on peut en effet ouvrir de nouveau la tranchée B en enlevant le remblai de façon à dégager entièrement le conduit S1 déjà réalisé et, sans modifier la constitution de ce dernier, on peut le coiffer d'un second élément inférieure 4 sur lequel vient reposer un second élément supérieur 5 de façon à réaliser le deuxième conduit S2.

A cet effet, il a été avantageux de prévoir, à l'avance, sur le premier élément supérieur 2 du conduit bas S1 des bossages 22 munis de rainures concaves 25 pour constituer les organes d'appui longitudinaux 32 du conduit haut. Cependant, il est possible également de placer ce dernier même si des organes d'appui adéquats n'ont pas été prévus à l'avance.

Dans les cas simples, on peut, par exemple utiliser le mode de réalisation de la Figure 2. Dans d'autres cas, on peut réaliser après coup des bossages d'appui de part et d'autre de l'élément supérieur 2 ou bien venir prendre appui directement sur les côtés latéraux 14 de l'élément de radier si ces derniers ont une largeur suffisante, comme on l'a représenté sur la Figure 3. Des appuis supplémentaires 16' peuvent alors être ménagés sur des longrines placées le long de chaque côté du radier du conduit bas et présentant une résistance et une surface d'assise suffisante. Un tel mode de réalisation sera préférée pour intervenir sur un conduit existant.

Par ailleurs, si l'utilisation d'organes d'appui articulés comprenant des parties conjuguées en creux et en saillie présente des avantages, dans certains cas et notamment pour des sections moyennes, de l'ordre de 1 à 2 m², et pour des remblais peu élevés, par exemple en site urbain, il est possible de supprimer les articulations et de réaliser un simple appui direct du second élément inférieur 4 sur le conduit bas S1 par l'intermédiaire de surfaces planes.

De plus, si l'on n'envisage pas un nouveau démontage de l'ouvrage, pour intervenir à l'intérieur de l'un ou l'autre des conduits, on peut aussi réaliser les parties d'appui sous forme de joints bétonnés en place qui solidarisent définitivement les éléments entre eux, selon l'un des modes de réalisation des joints décrits dans la demande de brevet européen EP-A-0081402.

Le mode de réalisation des Figures 1 et 2 permet donc d'adjoindre un conduit supplémentaire S2 à un conduit existant S1 sans intervenir sur ce dernier autrement qu'en ouvrant la tranchée et sera utilisé notamment, lorsque le conduit bas est réalisé de façon classique en maçonnerie.

En revanche, lorsque le conduit bas S1 est réalisé en deux éléments superposés, il sera intéressant d'utiliser le mode de réalisation représenté sur la Figure 4. Dans ce cas, en effet, après avoir ouvert la tranchée B pour dégager le conduit S1 réalisé auparavant, on enlève l'élément de recouvrement 2' de ce dernier en desserrant, le cas échéant, les tiges d'ancrage 23', et l'on pose à sa place l'élément intermédiaire 6 qui referme le conduit bas S1. C'est pourquoi, les rebords de centrage 65 ménagés sur les bords inférieurs de l'élément intermédiaire 6 doivent avoir un profil identique à celui des bords inférieurs 24' de l'élément supérieur 2'. De même, les rainures concaves 66 ménagées sur les deux côtés de la face supérieure 62 de l'élément 6 ont un profil identique à celui des rainures 16 de l'élément inférieur 1.

Comme on l'a indiqué plus haut, le profil de la face inférieure 61 de l'élément intermédiaire 6 peut être déterminé, si besoin est, pour conserver la section de passage du conduit bas S1.

Après avoir placé l'élément intermédiaire 6, on peut donc le recouvrir par l'élément supérieure 2' qui, auparavant, recouvrait le conduit bas S1, de façon à refermer le conduit haut S2.

Il est facile de prévoir, le cas échéant, des moyens d'ancrage 23' de longueur suffisante pour solidariser l'ensemble.

On voit que l'invention se prête à de nombreuses variantes et n'est dont pas limitée aux seuls modes de réalisation qui viennent d'être décrits à titre d'exemple, d'autres variantes pouvant être imaginées en restant dans le cadre de protection définie par les revendications.

En particulier, on a représenté sur les dessins l'application de l'invention à un conduit réalisé en deux éléments reposant l'un sur l'autre, mais l'invention pourrait s'appliquer à d'autres conduits tels que ceux qui sont décrits dans la demande européenne EP-A-0 081402, et notamment, au conduit à quatre élément comprenant un élément inférieur de radier, deux éléments de côté et un élément de voûte. Dans ce cas, on pourrait en effet prévoir sur les éléments de côté, des bossages analogues aux bossages 22, 22' ménagés sur le premier élément supérieur 2 dans les cas décrits précédemment et qui permettraient de servir d'appui à l'élément inférieur d'un conduit haut supplémentaire.

D'autre part, toute la description précédente s'applique à la réalisation d'un tronçon de l'ouvrage, chaque conduit étant, en fait, réalisé en mettant bout-à-bout le nombre voulu de tronçons adjacents. Il n'est cependant pas nécessaire que les plans de joints transversaux entre les tronçons adjacents du conduit bas S1 et du conduit haut S2 coïncident, un chevauchement des deux conduits ou mieux encore des éléments de chaque conduit pouvant, au contraire, améliorer la transmission des efforts et diminuer les risques de désalignements dus à des tassements différentiels.

## Revendications

1. Ouvrage souterrain construit à ciel ouvert, ledit ouvrage étant posé sur le fond (A) d'une tranchée (B) et recouvert d'un remblai, comprenant au moins deux conduits tubulaires superposés, d'axes parallèles à une même direction longitudinale, respectivement un conduit bas (S1) et un conduit haut (S2) limités chacun, en section droite, par un plancher inférieur sensiblement horizontal, et par une voûte supérieure fermant la section vers le haut et réalisée en éléments préfabriqués alignés prenant appui sur deux murs verticaux s'étendant respectivement le long de deux côtés latéraux parallèles à l'axe du conduit bas (S1),
caractérisé par le fait que le plancher (42) (62) du conduit haut (S2) forme avec les deux murs verticaux (43) (63) qui le soutiennent un ensemble constitué d'éléments préfabriqués (4) (6) et formant, en section droite, un élément inférieur du conduit haut (S2), ayant la forme d'un U inversé et susceptible de coiffer le conduit bas (S1), ledit élément inférieur (4) (6) comprenant une partie centrale (42) (62) en forme de dalle horizontale formant le plancher, prolongée verticalement vers le bas, le long de ses côtés latéraux, par deux flancs latéraux (43) susceptibles de reposer, par leurs extrémités inférieures, sur des organes d'appui longitudinaux inférieurs (32) ménagés respectivement le long des deux côtés latéraux du conduit bas (S1), ladite partie centrale en forme de dalle (42) étant coiffée par un élément supérieur de recouvrement (5) (2') fermant vers le haut la section du conduit haut (S2) et reposant sur deux organes d'appui longitudinaux (33) (33') ménagés respectivement sur les extrémités supérieures des deux flancs latéraux (43) (63) de l'élément inférieur du conduit haut (S2).

2. Ouvrage tubulaire selon la revendication 1, caractérisé par le fait que le conduit bas (S1) comprend, en section droite, un élément inférieur (1) formant un radier reposant sur le sol (A) et au moins un element supérieur (2) de recouvrement fermant la section (S1) vers le haut et qui est coiffé par l'élément inférieur (4) du conduit haut (S2) à la pose de ce dernier.

3. Ouvrage tubulaire selon la revendication 1, caractérisé par le fait qu'il comprend, en section droite, un élément (1) formant un radier reposant sur le sol (A) et constituant l'élément inférieur (1) du conduit bas (S1), un élément intermédiaire (6) reposant sur ledit élément inférieur (1) et constituant, d'un côté, l'élément supérieur de recouvrement du conduit bas (S1) et, de l'autre, l'élément inférieur du conduit haut (S2), et au moins un élément supérieur (2') de recouvrement du conduit haut (S2) reposant sur ledit élément intermédiaire (6), ce dernier étant muni le long de ses côtés latéraux (63) et sur ses deux faces opposées, respectivement inférieure (64) et supérieure (67), d'organes longitudinaux, respectivement, (65) d'appui sur l'élément inférieur (1) du conduit bas (S1) et (66) d'appui de l'élément supérieur (2') du conduit haut (S2).

4. Ouvrage tubulaire selon la revendication 3, caractérisé par le fait que l'élément intermédiaire (6) comprend une face inférieure (61) incurvée en forme de voûte et constituant le plafond du conduit bas (S1) et une face supérieure (62) sensiblement plane constituant le fond du conduit haut (S2).

5. Ouvrage tubulaire selon la revendication 2, caractérisé par le fait qu'il comprend, en section droite, un premier élément inférieur (1) reposant sur le sol et formant un radier (13) pour le conduit bas (S1), un premier élément supérieur (2) de recouvrement du conduit bas (S1), reposant sur ledit premier élément supérieur (1), le long de deux organes d'appui longitudinaux (3), un second élément inférieur (4) formant le fond du conduit haut (S2) et ayant une face inférieure (41) en forme de U inversé coiffant le premier élément supérieur (2) et comprenant deux flancs latéraux (43) s'étendant vers le bas et dont les extrémités inférieures (44) prennent appui sur l'un des éléments du conduit bas (S1), et un second élément supérieur (5) de recouvrement du conduit haut reposant sur ledit second élément inférieur (4).

6. Ouvrage tubulaire selon la revendication 5, caractérisé par le fait que les deux flancs latéraux (43) du second élément inférieur (4) reposent sur des parties d'appui longitudinales (22) ménagées en saillie sur l'extrados du premier élément supérieur (2).

7. Ouvrage tubulaire selon la revendication 5, caractérisé par le fait que les flancs latéraux (43) du second élément inférieur (4) reposent sur des parties d'appui longitudinales (31) ménagées le long des côtés latéraux (14) du premier élément inférieur (1), de part et d'autre des organes d'appui (3) du premier élément supérieur (2).

8. Ouvrage tubulaire selon la revendication 5, caractérisé par le fait que le second élément inférieur (4) repose par sa partie centrale (42) sur la partie centrale du premier élément supérieur (2) et que les deux flancs latéraux(43) sont munis de parties de centrage (44') prenant appui sur les côtés latéraux du premier élément supérieur (2).

9. Ouvrage tubulaire selon la revendication 5, caractérisé par le fait que l'élément inférieur (4) du conduit haut (S2) est réalisé en deux parties accolées (4a, 4b) prenant appui sur le conduit bas (S1), chacune, vers l'extérieur, par un côté latéral (43) reposant sur un appui latéral externe (32) et vers l'intérieur, par un côté interne (42') reposant sur la partie centrale de l'élément supérieur (2) du conduit bas (S1).

10. Ouvrage tubulaire selon l'une des revendications précédentes, caractérisé par le fait qu'au moins certains des organes d'appui longitudinaux (3) (3') (32) (33) interposés entre deux éléments, respectivement supérieur (2) (6) et inférieur (1), comprennent chacun un rebord de centrage (24) (65) allongé ménagé en saillie le long du côté latéral (21) (63) de l'un desdits éléments (2) (6) et s'engageant, à la pose des éléments l'un sur l'autre, dans une rainure correspondante (16) ménagée en creux le long du côté latéral correspondant (1) de l'autre élément (1).

11. Ouvrage tubulaire selon la revendication 10, caractérisé par le fait que le rebord de centrage (24) et la rainure (16) ménagés sur les faces en regard des deux éléments prenant appui l'un sur l'autre ont des profils arrondis, respectivement convexe et concave, avec une différence du courbure ménageant un léger jeu transversal de telle sorte que l'organe d'appui (3) (32) (33) ainsi constitué ait une certaine possibilité d'articulation autour d'un axe longitudinal.

12. Ouvrage tubulaire selon l'une des revendications précédentes, caractérisés par le fait qu'il comprend plus de deux conduits superposés, respectivement un conduit bas (S1) reposant sur le sol (A), un premier conduit haut (S2) coiffant le conduit bas (S1) et au moins un second conduit haut (S4) coiffant le premier conduit haut (S2).

13. Ouvrage tubulaire selon l'une des revendications précédentes, caractérisé par le fait que l'intérieur d'au moins l'un des conduits est mis en communication avec l'extérieur par au moins un orifice d'évent ménagé dans au moins l'un des éléments (2) (4) (5).

14. Ouvrage tubulaire selon la revendication 13, caractérisé par le fait qu'il comprend au moins une cheminée d'aération (27), munie d'un orifice d'entrée (28) ménagé dans l'élément supérieur (2) (6) de recouvrement de l'un des conduits (S1) (S2) et traversant les conduits (S2) (S4) placés au-dessus, de façon à déboucher à l'extérieur desdits conduits par un orifice de sortie (29) ménagé dans l'élément supérieur (50) de recouvrement du conduit le plus haut (S2) (S4).

15. Ouvrage tubulaire selon l'une des revendications précédentes, caractérisé par le fait que le conduit bas (S1) est un conduit existant recouvert d'un remblai et que le conduit haut (S2) est un conduit supplémentaire posé sur le conduit existant (S1) après une ouverture de la tranchée, l'ensemble étant ensuite remblayé.

16. Procédé de réalisation d'un ouvrage tubulaire selon la revendication 15, caractérisé par le fait que, pour adjoindre un conduit supplémentaire (S2) au conduit existant (S1), on ouvre la tranchée (B) jusqu'à découvrir entièrement le conduit (S1) déjà réalisé et, sans modifier la constitution de ce dernier, on le coiffe d'un élément inférieur (4) en forme de U renversé comprenant une partie centrale (42) qui passe au-dessus du conduit existant (S1) et deux flancs latéraux (43) prenant appui le long des côtés latéraux du conduit existant (S1), puis l'on pose sur ledit élément inférieur (4), un élément supérieur (5) de recouvrement fermant vers le haut, en section droite, le conduit supplémentaire (S2) ainsi formé, et l'on referme ensuite la tranchée (B).

17. Procédé de réalisation d'un ouvrage tubulaire selon la revendication 15, caractérisé par le fait que le conduit existant (S1) est constitué d'éléments longitudinaux associés comprenant, en section droite, un élément inférieur (1) reposant sur le sol et au moins un élément supérieur (2') de recouvrement, reposant sur des parties longitudinales d'appui (16) ménagées le long des côtés latéraux (14) de l'élément inférieur (1) et que, pour adjoindre ensuite un conduit supplémentaire au conduit existant (S1), on ouvre la tranchée (B) jusqu'à découvrir entièrement le conduit (S1), on enlève l'élément supérieur (2') et on le remplace par un élément intermédiaire (6) ayant une face inférieure (61) en forme de voûte comprenant une partie centrale en forme de dalle (60) et deux côtés latéraux (63) munis à leurs extrémités inférieures (64) de parties d'appui longitudinales (65) reposant sur lesdites parties d'appui (16) de l'élément inférieur (1) et présentant, sur leur face supérieure (62), des parties d'appui longitudinales (66) analogues à celles (16) de l'élément inférieur (1) et l'on referme le conduit haut (S2) en replaçant sur l'élément intermédiaire (6), l'élément supérieur (2') préalablement enlevé et qui vient reposer sur lesdites parties d'appui (66) de la face supérieure (62) de l'élément intermédiaire (6).

## Patentansprüche

1. Unterirdisches, im Freien errichtetes Gebilde, das auf dem Grund (A) eines Grabens (B) aufliegt und von einer Aufschüttung bedeckt ist, mit mindestens zwei übereinanderliegenden rohrförmigen Kanälen, deren Achsen zu einer selben Längsrichtung parallel liegen, und zwar einem unteren Kanal (S1) und einem oberen Kanal (S2), die jeweils im Querschnitt durch einen im wesentlichen horizontalen unteren Boden und durch ein oberes dem Querschnitt nach oben hin abschließendes und aus ausgerichteten, auf zwei vertikalen sich jeweils entlang zweier zur Achse des unteren Kanals (S1) paralleler Seitenteile erstreckenden Wänden lagernden Fertigteilen bestehendes Gewölbe begrenzt sind, dadurch gekennzeichnet, daß der Boden (42) (62) des oberen Kanals (S2) mit den beiden ihn tragenden senkrechten Wänden (43) (63) einen aus Fertigteilen (4) (6) gebildeten und im Querschnitt einen unteren Teil des oberen Kanals (S2) bildenden Aufbau bildet, der die Form eines umgekehrten U hat und den unteren Kanal (S1) abdecken kann, wobei das genannte untere Fertigteil (4) (6) einen mittleren Teil (42) (62) in der Form einer horizontalen den Boden bildenden Platte aufweist, die entlang ihrer Längsseiten durch zwei Seitenflanken (43) senkrecht nach unten verlängert ist, die mit ihren unteren Enden auf den länglichen unteren Stützen (32) ruhen, die jeweils entlang der beiden Längsseiten des unteren Kanals (S1) angeordnet sind, wobei der genannte mittlere Teil in Form einer Platte (42) durch ein oberes Abdeckelement (5) (2') bedeckt ist, das den Querschnitt des oberen Kanals (S2) nach oberen abdeckt und auf zwei länglichen Stützen (33) (33') lagert, die jeweils an den oberen Enden der beiden Seitenflanken (43) (63) des unteren Elements des oberen Kanals (S2) vorgesehen sind.

2. Rohrförmiges Gebilde nach Anspruch 1, dadurch gekennzeichnet, daß der untere Kanal (S1) im Querschnitt ein eine auf dem Grund (A) aufliegende Sohle bildendes unteres Element (1) und mindestens ein abdeckendes oberes Element (2) aufweist, das den Querschnitt (S1) nach oberen abschließt und das durch das untere Element (4) des oberen Kanals (S2) bei dessen Verlegung abgedeckt wird.

3. Rohrförmiges Gebilde nach Anspruch 1, dadurch gekennzeichnet, daß sein Querschnitt ein eine auf dem Grund (A) aufliegende Sohle bildendes und das untere Element (1) des unteren Kanals (S1) darstellendes Element (1), ein auf dem genannten unteren Element (1) aufliegendes und einerseits das obere Abdeckelement des unteren Kanals (S1) und andereseits das untere Element des oberen Kanals (S2) bildendes Zwischenelement (6), und mindestens ein auf dem genannten Zwischenelement (6) lagerndes oberes Abdeckelement (2') des oberen Kanals (S2) umfaßt, wobei dieses entlang seiner Seitenteile (63) und an seinen beiden sich gegenüberliegenden Seiten jeweils unten (64) und oben (67) mit länglichen Vorrichtungen versehen ist, die jeweils (65) auf dem unteren Element (1) des unteren Kanals (S1) aufliegen und (66) das obere Element (2') des oberen Kanals (S2) stützen.

4. Rohrförmiges Gebilde nach Anspruch 3, dadurch gekennzeichnet, daß das Zwischenelement (6) eine gewölbeförmig gekrümmte und die Decke des unteren Kanals (S1) bildende Unterseite und eine im wesentlichen ebene den Boden des oberen Kanals (S2) bildende obere Seite (62) aufweist.

5. Rohrförmiges Gebilde nach Anspruch 2, dadurch gekennzeichnet, daß sein Querschnitt ein erstes auf dem Erdboden aufliegendes und eine Sohle (3) für den unteren Kanal (S1) bildendes unteres Element (1), ein den unteren Kanal (S1) abdeckendes entlang der beiden länglichen Stützen (3) auf dem genannten ersten unteren Element (1) liegendes erstes oberes Element (2), ein den Boden des oberen Kanals (S2) bildendes zweites unteres Element (4) mit einer in der Form eines umgekehrten U ausgebildeten Unterfläche (41), die das erste obere Element (2) abdeckt und zwei Seitenflanken (43) aufweist, die sich nach unteren erstrecken und deren untere Enden (44) auf einem der Elemente des unteren Kanals (S1) lagern, und ein den oberen Kanal abdeckendes zweites oberes Element (5), das auf dem zweiten unteren Element (4) lagert, aufweist.

6. Rohrförmiges Gebilde nach Anspruch 5, dadurch gekennzeichnet, daß die beiden Seitenflanken (43) des zweiten unteren Elements (4) auf den länglichen Stützen (22) lagern, die an die äußere Bogenfläche des ersten oberen Elementes (2) hervorstehend angesetzt sind.

7. Rohrförmiges Gebilde nach Anspruch 5, dadurch gekennzeichnet, daß die Seitenflanken (43) des zweiten unteren Elements (4) auf länglichen Stützen (31) lagern, die beidseitig entlang des Seitenteile (14) des ersten unteren Elementes (1) vorgesehen sind.

8. Rohrförmiges Gebilde nach Anspruch 5, dadurch gekennzeichnet, daß das zweite untere Element (4) mit seinem mittleren Teil (42) auf dem mittleren Teil des ersten oberen Elementes (2) lagert und daß die beiden Seitenflanken (43) mit Zentrierteilen (44') versehen sind, die sich auf den Seitenteilen des ersten oberen Elementes (2) Abstützen.

9. Rohrförmiges Gebilde nach Anspruch 5, dadurch gekennzeichnet, daß das untere Element (4) des oberen Kanals (S2) in zwei zusammengefügten Teilen (4a, 4b) ausgeführt ist, die sich jeweils auf dem unteren Kanal (S1) abstützen, und zwar nach außen durch ein Seitenteil (43), das auf einer außenliegenden Seitenstütze (32) lagert, und nach innen durch ein Inneteil (42'), das auf dem mittleren Teil des oberen Elements (2) des unteren Kanals (S1) lagert.

10. Rohrförmiges Gebilde nach einem der vorgenannten Ansprüche, dadurch gekennzeichnet, daß mindestens einige der zwischen zwei Elementen, einem oberen (2) (6) und einem unteren (1), befindlichen Längsstützen (3) (3') (32) (33) jeweils einen langgestreckten entlang des Seitenteils (21) (63) eines der genannten Elemente (2) (6) hervorstehend angesetzten Zentrierrand (24) (65) aufweisen, der beim Aufeinandersetzen der Elemente in eine entsprechende entlang des entsprechenden Seitenteils (1) des anderen Elementes (1) hohl ausgebildete Rinne (16) eingreift.

11. Rohrförmiges Gebilde nach Anspruch 10, dadurch gekennzeichnet, daß der Zentrierrand (24) bzw. die Rinne (16), die auf den gegenüberstehenden Flächen der beiden aufeinanderliegenden Elemente vorgesehen sind, mit runden jeweils konvex bzw. konkav ausgebildeten Profilen versehen sind, deren geringfügig unterschiedlich ausgeführte Krümmung ein leichtes Seitenspiel zuläßt, so daß die so ausgebildete Stütze (3) (32) (33) zu einem gewissen Grad um eine Längsachse gelenkig ist.

12. Rohrförmiges Gebilde nach einem der vorgenannten Ansprüche, dadurch gekennzeichnet, daß es mehr als zwei übereinanderliegende Kanäle aufweist, und zwar nämlich jeweils einen auf dem Grund (A) aufliegenden unteren Kanal (S1), einen ersten den unteren Kanal (S1) abdeckenden oberen Kanal (S2) und mindestens einen den ersten oberen Kanal (S2) abdeckenden zweiten oberen Kanal (S4).

13. Rohrförmiges Gebilde nach einem der vorgenannten Ansprüche, dadurch gekennzeichnet, daß aus dem Inneren mindestens eines der Kanäle über mindestens eine in mindestens einem der Elemente (2) (4) (5) vorgesehene Lüftungsöffnung eine Verbindung nach außen geschaffen ist.

14. Rohrförmiges Gebilde nach Anspruch 13, dadurch gekennzeichnet, daß es mindestens einen Lüftungsschacht (27) aufweist, der mit einer in dem einen der Kanäle (S1, S2) abdeckenden oberen Element (2) (6) vorgesehenen Eingangsöffnung (28) versehen ist und die darüber liegenden Kanäle (S2, S4) so durchläuft, daß er aus den genannten Kanälen kommend durch eine in dem den obersten Kanal (S2, S4) abdeckenden oberen Element (50) vorgesehene Ausgangsöffnung (29) nach außen mündet.

15. Rohrförmiges Gebilde nach einem der vorgenannten Ansprüche, dadurch gekennzeichnet, daß der untere Kanal (S1) ein durch eine Aufschüttung bedeckter vorhandener Kanal ist, und daß der obere Kanal (S2) ein nach dem Öffnen des Grabens zusätzlich auf den vorhandenen Kanal (S1) aufgesetzter Kanal ist, wonach die Konstruktion wieder zugeschüttet wird.

16. Verfahren zur Herstellung eines rohrförmigen Gebildes nach Anspruch 15, dadurch gekennzeichnet, daß der Graben (B) zum Aufsetzen eines zusätzlichen Kanals (S2) auf einen vorhandenen Kanal (S1) geöffnet wird, bis der bereits vorhandene Kanal (S1) vollständig freigelegt ist, ohne dessen Beschaffenheit zu verändern, ihm ein unteres Element (4) in der Form eines umgekehrten U aufgesetzt wird, das einen über dem vorhandenen Kanal (42) verlaufenden mittleren Teil (42) und zwei entlang der Seitenteile des vorhandenen Kanals (S1) aufliegende Seitenflanken (43) aufweist, anschließend auf das genannte untere Element (4) ein den so gebildeten zusätzlichen Kanal (S2) im Querschnitt nach oben hin abschließendes abdeckendes oberes Element (5) aufgesetzt wird und der Graben (B) danach wieder geschlossen wird.

17. Verfahren zur Herstellung eines rohrförmigen Gebildes nach Anspruch 15, dadurch gekennzeichnet, daß der vorhandene Kanal (S1) aus länglichen zusammenhängenden Elementen gebildet ist, die im Querschnitt ein auf dem Boden aufliegendes unteres Element (1) und mindestens ein auf den entlang der Seitenteile (14) des unteren Elementes (1) vorgesehenen länglichen Stützen (16) aufliegendes abdeckendes oberes Element (2') umfassen, und daß zum späteren Hinzufügen eines zusätzlichen Kanals auf den vorhandenen Kanal (S1) ein Graben (B) geöffnet wird, bis der Kanal (S1) vollständig freigelegt ist, das obere Element (2') abgenommen und durch ein Zwischenelement (6) mit einer gewölbeartig ausgeformten Unterfläche (61) mit einem plattenförmig ausgebildeten mittleren Teil (60) und zwei Seitenteilen (63) ersetzt wird, deren untere Enden (64) mit länglichen Stützen (65) versehen sind, die auf den genannten länglichen Stützen (16) des unteren Elementes (1) lagern, und die auf ihrer Oberfläche (62) längliche Stützen aufweisen, die analog zu denen (16) des unteren Elements (1) ausgeführt sind, und der obere Kanal (S2) wieder geschlossen wird, indem das zuvor abgenommene und auf den genannten Stützen (66) der Oberfläche (62) des Zwischenelementes (6) gelagerte obere Element (2') wieder auf das Zwischenelement (6) gesetzt wird.

## Claims

1. An underground tubular structural system open air built, resting on the bottom (A) of a trench (B) and covered by a fill, said tubular structural system comprising at least two superposed tubular conduits which are parallel to a single longitudinal direction respectively a low conduit (S1) and a high conduit (S2) each delimited in cross section by a lower floor substantially horizontal and by an upper vault closing the section upwards and made with aligned prefabricated elements bearing on two vertical walls which extend respectively along two lateral sides parallel to the axis of the low conduit (S1) characterized in that the floor (42) (62) of the high conduit (S2) constitutes with the two vertical walls (43) (63) which support it an assembly constituted of prefabricated elements (4) (6) and forming, in cross section, a lower element of the high conduit (S2) in the shape of an inverted U liable of capping the low conduit (S1), said lower element (4) (6) comprising a central part (42) (62) having the form of an horizontal slab constituting the floor and extended vertically downwards along lateral sides thereof by two lateral flanks (43) liable to bear by the lower extremities thereof, on lower longitudinal bearing elements (32) provided respectively along the two lateral sides of the low conduit (S1), the said central part having a slab shape being capped by a covering upper element (5) (2') closing upwards the high conduit (S2) section and resting on two longitudinal bearing elements (33) (33') provided respectively on the upper extremities of the two lateral flanks (43) (63) of the lower element of the high conduit (S2).

2. A tubular structural system according to claim 1, characterized in that the low conduit (S1) comprises in cross section a lower element (1) forming a bed plate resting on the ground (A) and at least one upper covering element (2) closing the section (S1) towards the top and capped by the lower element (4) of the high conduit (S2) when the latter is put in place.

3. A tubular structural system according to claim 1, characterized in that it comprises in cross section an element (1) forming a bed plate resting on the ground (A) and constituting the lower element (1) of the low conduit (S1), an intermediate element (6) resting on the said lower element (1) and constituting on one side the upper element for covering the low conduit (S1) and on the other side the lower element of the high conduit (S2), and at least one upper element (2'), for covering the high conduit (S2), resting on the said intermediate element (6), the latter being equipped along its lateral sides (63) and on its two opposing faces, respectively the lower (64) and the upper (67), with longitudinal members, respectively (65) for bearing on the lower element (1) of the low conduit (S1) and (66) for bearing on the upper element (2') of the high conduit (S2).

4. A tubular structural system according to claim 3, characterized in that the intermediate element (6) comprises a lower face (61) vault-shaped and constituting the ceiling of the low conduit (S1) and a substantially flat upper face (62) constituting the bottom of the high conduit (S2).

5. A tubular structural system according to claim 2, characterized in that it comprises in cross section a first lower element (1) resting on the ground and forming a bed plate (13) for the low conduit (S1), a first upper element (2) for covering the low consuit (S1), resting on the said first lower element (1) along two longitudinal bearing members (3), a second lower element (4) forming the bottom of the high conduit (S2) and having a lower face (41) in the shape of an inverted U capping the first upper element (2) and comprising two lateral flanks (43) which extend downwards and whereof the lower ends (44) bear on one of the elements of the low conduit (S1), and a second upper element (5) for covering the high conduit, resting on the said second lower element (4).

6. A tubular structural system according to claim 5, characterized in that the two lateral parts (43) of the second lower element (4) rest on longitudinal bearing parts (22) forming projectious on the outer side of the first upper element (2).

7. A tubular structural system according to claim 5, characterized in that the lateral flanks (43) of the second lower element (4) rest on longitudinal bearing parts (31) provided along the lateral sides (14) of the first lower element (1) on either side of the bearing members (3) of the first upper element (2).

8. A tubular structural system according to claim 5, characterized in that the second lower element (4) rests by means of its central part (42) on the central part of the first upper element (2), and the two lateral flanks (43) are equipped with centering parts (44') bearing on the lateral sides of the first upper element (2).

9. A tubular structural system according to claim 5, characterized in that the lower element (4) of the high conduit (S2) is produced in two adjacent parts (4a,4b), each bearing on the low conduit (S1) outwards through a lateral side (43) resting on an outer lateral bearing (32) and inwards through an inner side (42') resting on the central part of the upper element (2) of the low conduit (S1).

10. A tubular structural system according to any one of the preceding claims, characterized in that at least some of the longitudinal bearing members (3) (3') (32) (33) placed between two elements, respectively the upper (2) (6) and the lower (1), each comprises an elongate centering shoulder (24) (65) provided projecting along the lateral side (21) (63) of one of the said elements (2) (6) and enganging, when the elements are placed one above the other, in a corresponding hollow groove (16) provided, along the corresponding lateral side (1) of the other element (1).

11. A tubular structural system according to claim 10, characterized in that the centering shoulder (24) and the groove (16) provided on the opposite faces of the two elements bearing one above the other have rounded profiles which are respectively convex and concave, with a difference in curvature providing a slight transverse play such that the bearing member (3) (32) (33) thus formed has a certain possibility of articulation about a longitudinal axis.

12. A tubular structural system according to any one of the preceding claims characterized in that it comprises more than two conduits places one above the other, respectively a low conduit (S1) resting on the ground (A), a first high conduit (S2) capping the low conduit (S1) and a least one second high conduit (S4) capping the first high conduit (S2).

13. A tubular structural system according to any one of the preceding claims, characterized in that the inside of at least one of the conduits communicates with the outside by way of at least one venting orifice provided in at least one of the elements (2) (4) (5).

14. A tubular structural system according to claim 13, characterized in that it comprises at least one air shaft (27) which is equipped with an inlet orifice (28) provided in the upper element (2) (6) for covering one of the conduits (S1) (S2) and which passes through the conduits (S2) (S4) placed above so as to open outside of said conduits by way of an outlet orifice (29) provided in the upper element (50) for covering the highest conduit (S2) (S4).

15. A tubular structural system according to any one of the preceding claims characterized in that the low conduit (S1) is an existing conduit covered with a fill, and the high conduit (S2) is a supplementary conduit placed on the existing conduit (S1) after opening the trench, the entire unit then being filled.

16. A method for producing a tubular structural system according to claim 15, characterized in that to add a supplementary conduit (S2) to the existing conduit (S1), the trench (B) is opened until the already produced conduit (S1) is completely uncovered and, without altering the configuration of the latter, it is capped with a lower element (4) in the form of an inverter U comprising a central part (42) which passes above the existing conduit (S1) and two lateral parts (43) bearing along the lateral sides of the existing conduit (S1), and an upper covering element (5) is then placed on the said lower element (4) for closing towards the top in cross section the supplementary conduit (S2) thus formed, and the trench (B) is then closed.

17. A method for producing a tubular structural system according to claim 15, characterized in that the existing conduit (S1) is formed by associated longitudinal elements which comprise in cross section a lower element (1) resting on the ground and at least one upper covering element (2') resting on longitudinal bearing parts (16) provided along the lateral sides (14) of the lower element (1), and, in order to then add a supplementary conduit to the existing conduit (S1), the trench (B) is opened until the conduit (S1) is completely uncovered, the upper element (2') is removed and is replaced by an intermediate element (6) having a lower face (61) wault-shaped comprising a central part in the shape of a plate (60) and two lateral sides (63) equipped at their lower ends (64) with longitudinal bearing parts (65) resting on the said bearing parts (16) of the lower element (1) and having on their upper face (62) longitudinal bearing parts (66) similar to those (16) of the lower element (1), and the high conduit (S2) is closed by again placing, on the intermediate element (6), the upper element (2') which was previously removed and which comes to rest on the said bearing parts (66) of the upper face (62) of the intermediate element (6).
